# EUROPEAN PATENT APPLICATION

(11) **EP 4 496 142 A1**
(43) Date of publication of application: **22.01.2025**
(21) Application number: 23769749.5
(22) Date of filing: 14.03.2023
(51) Int. Cl.: H01R 31/06, H01R 13/02, H01R 13/03, H01R 13/405, H01R 13/62, H01R 13/6581, H01R 13/73, H01B 7/18, H01B 7/29, H01B 7/02, B60L 53/16, B60L 53/18

(54) **ELECTRIC ENERGY TRANSMISSION CONNECTING DEVICE AND VEHICLE**

(30) Priority: 14.03.2022 CN 202210250056
(71) Applicant: Jilin Zhong Ying High Technology Co., Ltd., Jilin 130028 (CN)
(72) Inventor: WANG, Chao, Changchun, Jilin 130028 (CN)
(74) Representative: Dehns
(86) International application number: PCT/CN2023/081261
(87) International publication number: WO 2023/174247

(57) **Abstract**

The present disclosure discloses an electric energy transmission connecting device and a vehicle, including at least one electric connection skeleton and connectors connected to two ends of the electric connection skeleton, and the connector is internally provided with at least one fixing cavity, an end portion of the electric connection skeleton extends to form terminal structure, at least a part of the terminal structure is arranged in the fixing cavity, and the terminal structure achieves an electric connection function of the connector. According to the electric energy transmission connecting device in the present disclosure, the terminal structure and the electric connection skeleton can be prevented from being broken due to vibration in a use process, and the stability of which is enhanced.

## Description

The present disclosure claims priority to Chinese Patent Application No. 202210250056.7, filed on March 14, 2022, and entitled "Electric Energy Transmission Connecting Device and Vehicle", which is hereby incorporated by reference in its entirety.

### TECHNICAL FIELD

The present disclosure relates to the technical field of automotive electric appliances, and particular to an electric energy transmission connecting device and a vehicle.

### BACKGROUND

With the popularization of new energy automobiles, devices and facilities for transmitting electric energy to the new energy automobiles are also developed. Connector assemblies on the new energy automobiles need to meet the requirement of high-power motors, so that transmitted currents are relatively large, the diameters of high-voltage cables on the connector assemblies are also increased, assembling the high-voltage cables on vehicle bodies can only be achieved by means of manual mounting, and the labor cost and time cost are wasted.

In addition, in a normal use process, the very large current flows through the high-voltage cable, so that a large amount of heat will be generated by the high-voltage cable and connection joints. The excessively heat will result in the high temperature, the connection position of the high-voltage cable and surrounding connectors and fixing members will fail due to the high temperature, thus normal use of the connector assembly is affected, short circuits and open circuits occur, and even electric shock hazards occur, which is a life-threatening situation.

A connection terminal of the connector assembly is usually connected to an electric connection skeleton, and the contact resistance is very high, so that when a high-voltage device operates for a long time or is overloaded or short-circuited, the connection position will be heated quickly to cause accidents. In addition, the cost of a copper terminal is increased, people are looking for an alternative and separate terminal with the lower cost and excellent electric conductivity.

Therefore, how to provide an electric energy transmission connecting device that can effectively avoid the excessively high cost and prevent the contact resistance between a connection terminal and an electric connection skeleton from being too high is an urgent technical problem in the field.

### SUMMARY

One purpose of the present disclosure is to provide a new technical solution of an electric energy transmission connecting device.

According to a first aspect of the present disclosure, an electric energy transmission connecting device is provided. The electric energy transmission connecting device includes at least one electric connection skeleton and connectors connected to two ends of the electric connection skeleton, and the connector is internally provided with at least one fixing cavity, an end portion of the electric connection skeleton extends to form a terminal structure, at least a part of the terminal structure is arranged in the fixing cavity, and the terminal structure achieves an electric connection function of the connector.

Optionally, the terminal structure and the electric connection skeleton have different shapes of cross sections.

Optionally, the terminal structure and the electric connection skeleton have different cross sectional areas.

Optionally, the connector is formed on the terminal structure and the electric connection skeleton.

Optionally, the connector internally includes a high-voltage interlock mechanism.

Optionally, at least a part of the electric connection skeleton is a rigid body, and the tensile strength of the electric connection skeleton is higher than 75 MPa.

Optionally, the terminal structure is arranged at an angle relative to an axial direction of the electric connection skeleton.

Optionally, an angle formed by the terminal structure and the axial direction of the electric connection skeleton is 0° to 180°.

Optionally, at least a part of a surface of the terminal structure is provided with a spacer metal layer, and a thermal expansion coefficient of a material of the spacer metal layer is greater than or equal to 1.1 * 10⁻⁶/K.

Optionally, at least a part of a surface of the terminal structure is provided with a spacer metal layer, and the spacer metal layer contains at least 37wt% of a copper-aluminum solid solution.

Optionally, the copper-aluminum solid solution contains a copper-aluminum compound, and the content of the copper-aluminum compound is less than 15wt%.

Optionally, at least a part of a surface of the terminal structure is provided with a spacer metal layer, and a material of the spacer metal layer contains one or more selected gold, silver, nickel, tin, zinc, a tin lead alloy, a silver antimony alloy, palladium, a palladium nickel alloy, graphite silver, graphene silver and a silver gold zirconium alloy.

Optionally, at least a part of a surface of the terminal structure is provided with a spacer metal layer, and the spacer metal layer is arranged on the terminal structure in an electroplating, electroless plating, magnetron sputtering, vacuum plating, welding, attaching, brush-coating, spray-coating or bonding manner.

Optionally, a portion of the terminal structure close to the electric connection skeleton is provided with a groove or a protrusion, the fixing cavity is internally provided with a protrusion or a groove, and the protrusion and the groove are snap-fitted in a matched manner.

Optionally, a sealing ring is arranged between the protrusion and the groove.

Optionally, the terminal structure is a columnar body, and a cross section of the columnar body is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

Optionally, the terminal structure is in a busbar shape, and the basbar shape is provided with a through hole or a threaded hole.

Optionally, the terminal structure includes an upper clamping plate with a flat plate shape and a lower clamping plate with the flat plate shape, and a terminal plug-in groove is formed between the upper clamping plate and the lower clamping plate.

Optionally, the terminal structure is in a cylindrical shape, and a cross section of the interior of the cylindrical shape is in one or selected ftom a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

Optionally, an outer wall of the cylindrical shape is provided with an expansion-contraction joint extending in an axial direction, and the expansion-contraction joint divides the terminal structure into elastic sheets.

Optionally, an edge of end portion of the terminal structure away from the electric connection skeleton is chamfered and rounded.

Optionally, a periphery of the electric connection skeleton is further sleeved with an insulating layer.

Optionally, the electric connection skeleton is provided with at least one bent portion, at least a part of the bent portion includes at least one cavity, and the cavity is located between an inner wall of the insulating layer and the periphery of the electric connection skeleton.

Optionally, a periphery of the insulating layer is further sequentially sleeved with a shielding layer and an outer insulating layer.

Optionally, a sealing structure is provided between the connector and the insulating layer.

Optionally, a sealing structure is provided between the connector and the outer insulating layer.

Optionally, the connector is internally provided with an inner shielding shell with a shielding effect, and the inner shielding shell is electrically connected to the shielding layer.

Optionally, materials of the shielding layer and/or the inner shielding shell contain an electrically conductive metal or an electrically conductive plastic.

Optionally, one of the connectors is a charging socket.

Optionally, a cross section of the electric connection skeleton is in a polygonal shape, and all corners of the polygonal shape are chamfered or rounded.

According to a second aspect of the present disclosure, a vehicle is provided. The vehicle includes the electric energy transmission connecting device.

The electric energy transmission connecting device according to the present disclosure has the following beneficial effects:
1. the end portion of the electric connection skeleton extends to form the terminal structure, the terminal structures and the electric connection skeleton can be prevented from being broken due to vibration in a use process, and the stability of a structure between the terminal structure and the electric connection skeleton is enhanced. Meanwhile, a connection structure between the electric connection skeleton and the terminal structure is canceled, and the increase of resistance and the increase of voltage drop due to the connection structure are reduced, so that the electric energy transmission is more stable, the temperature rise between the electric connection skeleton and the terminal structure is also reduced, the service lives of the electric connection skeleton and the terminal structure are prolonged, and the processing cost is reduced;
2. the terminal structure and the electric connection skeleton are made of aluminum, so that the product cost is reduced, the product weight is reduced, and the production procedures are simplified;
3. the problems that automatic production and assembly cannot be achieved due to most large-current wire harnesses use flexible cables at present are solved, the electric connection skeleton with at least partially rigid is used, and automatic assembly and mounting of the wire harnesses can be achieved;
4. the problems of damage and short-circuiting of the insulating layer due to the contact friction of the flexible cable with a vehicle shell are solved, and the electric connection skeleton can be arranged along with the shape of a vehicle body, but can also has a certain distance from the vehicle body, so that it can be ensured that it does not rub against the vehicle shell, thereby ensuring the service life of the electric connection skeleton;
5. the inner shielding shell is provided inside the connector, so that the electromagnetic interference generated by the terminal of the connector can be effectively prevented; and the inner shielding shell made of the electrically conductive plastic can be integrally formed with the connector in an integrated injection molding manner, thereby saving the processing time, improving the production efficiency, and reducing the production cost;
6. the electric connection skeleton is further provided with the flexible portion and the bent portion, the structure of a connector assembly can be reasonably designed according to a mounting environment of the vehicle body, thus the connector assembly is more easily mounted on the vehicle body, and the assembly time is saved;
7. the cavity exists between the bent portion of the electric connection skeleton and the inner wall of the insulating layer, air exists in the cavity, and the thermal conduction effect of the closed air is poor, so that when the heating amount of the bent portion of the electric connection skeleton is large, the insulating layer outside the cavity will not be affected, thereby protecting the insulating layer of the bent portion against softening or melting;
8. the closed air inside the cavity has an effect of heat isolation, so that heat of the bent portion of the electric connection skeleton cannot be transmitted outside the insulating layer, and a low-melting-point object, such as a rubber-coated fabric and a sponge, that covers the insulating layer cannot be heated to be molten, thereby reducing the probability of accidents; and
9. the closed air inside the cavity expands during heating of the bent portion of the electric connection skeleton, due to the existence of the insulating layer, the pressure in the cavity gradually increases, according to the Paschen's rule, the breakdown voltage increases as the air pressure increases, thus the voltage breakdown resistance of the bent portion is improved, and the safety of an electric energy transmission system is improved.

Other features and advantages of the present disclosure will become clear through detailed description of embodiments of the present disclosure below with reference to the drawings.

### BRIEF DESCRIPTION OF THE DRAWINGS

Drawings incorporated in the specification and constituting a portion of the specification show embodiments of the present disclosure, and are used for illustrating principles of the present disclosure together with the explanations thereof.
FIG. 1 is a structural schematic diagram of an electric energy transmission connecting device according to the present disclosure;
FIG. 2 to FIG. 7 are axial section views of different embodiments of a connector assembly made of a new shielding material according to the present disclosure;
FIG. 8 is a structural schematic diagram of a bent portion of an electric connection skeleton according to the present disclosure; and
FIG. 9 is a structural schematic diagram of an embodiment of a cavity according to the present disclosure.

### DESCRIPTION OF THE EMBODIMENTS

Various embodiments of the present disclosure will now be described in detail with reference to the drawings. It should be noted that, unless otherwise specified, the relative arrangements, numeric expressions and values of components and steps set out in these embodiments do not limit the scope of the present disclosure.

Actually, the following description of at least one embodiment is only for the illustrative purpose, and shall not be construed as any limitation on the present disclosure or the application and use thereof.

For those of ordinary skill in the art, the known techniques, methods and devices may not be discussed in detail. However, under appropriate conditions, the techniques, methods and devices should be regarded as a part of the specification.

In all examples shown and discussed here, any specific value should be explained as exemplary only, and does not serve as a limitation. Therefore, other examples of the embodiments may have different values.

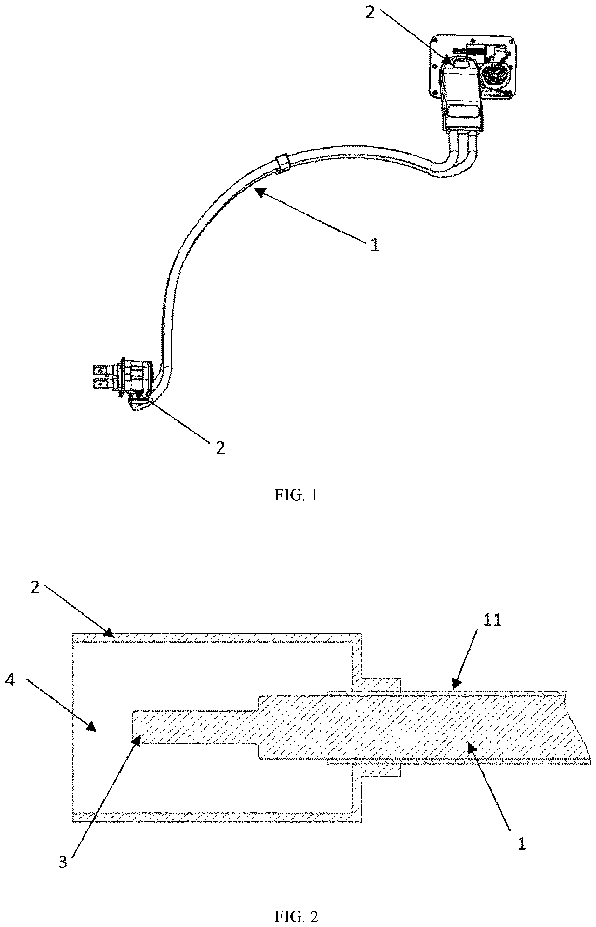

An electric energy transmission connecting device in the present disclosure, as shown in FIG. 1 to FIG. 7, includes at least one electric connection skeleton 1 and connectors 2 connected to two ends of the electric connection skeleton 1, and the connector 2 is internally provided with at least one fixing cavity 4, an end portion of the electric connection skeleton 1 extends to form a terminal structure 3, at least a part of the terminal structure 3 is arranged in the fixing cavity 4, and the terminal structure 3 achieves an electric connection function of the connector 2.

In a generally used connector, a cable and the terminal structure 3 are separately processed and formed, during assembly, the terminal structure 3 and electrically conductive portion of the cable are connected in a welding or crimping manner to form connection structure, and mechanical properties of the connection structure are generally inferior to those of the cable or terminals, so that when the connector is subjected to a drawing force, the connection structure is broken first, and the electric energy transmission connecting device cannot be used. Besides, regardless of the welding manner or the crimping manner, contact resistance exists between the terminal structure 3 and the cable, so that the resistance of the connection structure is lower than the cable or the terminal, and when a large current is conducted, the heat generated by the connection structure is high due to the low resistance, resulting in a burning accident of the connector in serious cases.

During specific implementation, the end portions of the electric connection skeleton 1 extend to form the terminal structures 3, so that the terminal structures and the electric connection skeleton can be prevented from being broken due to vibration in a use process, and the stability of the connection structures between the terminal structures 3 and the electric connection skeleton 1 is enhanced. Meanwhile, the connection structure between the electric connection skeleton 1 and the terminal structure 3 are canceled, and the increase of the resistance and the increase of voltage drop due to the connection structure are reduced, so that the electric energy transmission is more stable, the temperature rise between the electric connection skeleton 1 and the terminal structure 3 is also reduced, the service lives of the electric connection skeleton 1 and the terminal structure 3 are prolonged, and the processing cost is reduced.

In an implementation manner, the terminal structures 3 and the electric connection skeleton 1 is capable of being made of aluminum, so that the product cost is reduced, the product weight is reduced, and the production procedures are simplified.

In an embodiment of the electric energy transmission connecting device according to the present disclosure, the terminal structure 3 and the electric connection skeleton 1 have different shapes of cross sections.

During specific implementation, the shapes of the cross sections of the terminal structure 3 is capable of being set to be different from that of the electric connection skeleton 1 and can be specifically set according to requirements, thereby facilitating wiring of the electric connection skeleton 1 on a vehicle; and the terminal structure 3 is designed to have the corresponding shape of cross section according to their own requirements, thereby facilitating the connection of the terminal structures 3 and plug terminals.

In an embodiment of the electric energy transmission connecting device according to the present disclosure, the terminal structure 3 and the electric connection skeleton 1 have different cross sectional areas.

During specific implementation, the cross sectional area of the terminal structure 3 is capable of being set to be different from that of the electric connection skeleton 1, and the respective cross sectional areas can be calculated according to the specific materials of the electric connection skeleton 1 and the electric connection skeleton 1, thereby meeting the use conditions on the vehicle.

In an embodiment of the electric energy transmission connecting device according to the present disclosure, the connector 2 is formed on the terminal structure 3 and the electric connection skeleton 1.

During specific implementation, the connector 2 is formed on the terminal structure 3 and the electric connection skeleton 1, or the connector 2 is integrally formed with the terminal structure 3 and the electric connection skeleton 1, so that the connection stability of the electric connection skeleton 1 and the connector 2 can be improved, and the service life of the electric connector assembly can be prolonged.

A forming manner of the connectors 2 may be an injection molding manner, an extrusion molding manner, a blow molding manner, a foaming manner, a dip-molded manner or a 3D (3-dimensional) printing manner.

In an embodiment of the electric energy transmission connecting device according to the present disclosure, the connector 2 internally includes a high-voltage interlock mechanism.

The high-voltage interlock mechanism is a safe design method for monitoring the integrity of a high-voltage circuit by means of low-voltage signals, different designs are provided for the specific high-voltage interlock mechanism manners in different projects, and high-voltage interlocking aims to monitor accidental disconnection of the high-voltage circuit to avoid damage to the vehicle due to the sudden loss of power.

During specific implementation, by means of the integrated injection molding manner, the connector 2 and the high-voltage interlock mechanism are formed in one time, thereby reducing the assembly hours, and improving the production efficiency. The high-voltage interlock mechanism can ensure the safety of an operator in an actual use process, thereby avoiding casualties and property losses due to electric shocks during maintenance due to device failures.

In an embodiment of the electric energy transmission connecting device according to the present disclosure, at least a part of the electric connection skeleton 1 is a rigid body, and the tensile strength of the electric connection skeleton 1 is higher than 75 MPa.

The rigid body refers to an object with the shape and size unchanged and relative positions of various points inside unchanged during motion and after being stressed. An absolute rigid body does not actually exist and is only an ideal model, because any object is deformed to a certain extent after being stressed. If the deformation degree is very low relative to geometric dimensions of the object, the deformation can be omitted when the motion of the object is researched. Therefore, during use of the electric connection skeleton 1 made of the rigid body material, the produced deformation amount is very little and can be omitted, and as the tensile strength of the rigid body increases, the deformation amount is reduced.

In order to verify the influences of the tensile strength of the electric connection skeleton 1 on the tensile value when the electric connection skeleton 1 is pulled apart, the torque when the electric connection skeleton 1 is bent and whether has the abnormal sounds in a vibration process, the inventor selects electric connection skeleton 1 samples with the same dimensions and different tensile strength to test the torque when the electric connection skeleton 1 is bent and whether has the abnormal sounds in the vibration process.

A method for testing the tensile value of the electric connection skeleton 1 is as follows: using a universal tensile test machine, respectively fixing the two ends of the electric connection skeleton 1 to tensile jigs of the universal tensile test machine, performing stretching at a speed of 50 mm/min, and recording the tensile value when finally being pulled apart. In this embodiment, the tensile value greater than 1600 N is a qualified value.

A method for testing the torque of the electric connection skeleton 1 is as follows: using a torque tester, and when the electric connection skeleton 1 is bent by 90° at the same radius and the same speed, testing the torque value of deformation of the electric connection skeleton 1 in the bending process. In this embodiment, the torque value less than 60 N·m is an exemplary value.

Whether the electric connection skeleton 1 has the abnormal sounds is tested with such a method that the electric connection skeleton 1 samples with the same dimensions and different tensile strength and the connectors 2 with the same dimensions are selected, assembled together and fixed on a vibration test platform, and in a vibration test process, whether the electric connection skeletons 1 have the abnormal sounds is observed.

**Table 1: Influences of different tensile strength on tensile values, torque values and abnormal sounds of electric connection skeletons 1**

| Different tensile strength (MPa) | | | | | | | | | | | |
|---|---|---|---|---|---|---|---|---|---|---|---|
| 60 | 70 | 75 | 80 | 120 | 200 | 280 | 330 | 380 | 430 | 480 | 500 |

| Tensile value of electric connection skeleton 1 when being pulled apart (N) | | | | | | | | | | | |
|---|---|---|---|---|---|---|---|---|---|---|---|
| 1421 | 1555 | 1678 | 1708 | 1757 | 1825 | 1867 | 1911 | 1952 | 1999 | 2040 | 2067 |

| Torque value when being bent in horizontal direction (N·m) | | | | | | | | | | | |
|---|---|---|---|---|---|---|---|---|---|---|---|
| 6 | 8 | 9 | 19 | 27 | 34 | 43 | 46 | 48 | 53 | 59 | 71 |

| Whether the electric connection skeleton 1 has abnormal sounds | | | | | | | | | | | |
|---|---|---|---|---|---|---|---|---|---|---|---|
| Yes | Yes | No | No | No | No | No | No | No | No | No | No |

It can be seen from Table 1 that when the tensile strength of the electric connection skeleton 1 is less than 75 Mpa, the tensile value of the electric connection skeleton 1 when being pulled apart is less than 1600 N, then the strength of the electric connection skeleton 1 is not high, the skeleton is pulled apart easily under a small external force, resulting in failure of functions of the electric connection skeleton 1, and thus the purpose of electric energy transmission cannot be achieved.

On the other hand, the greater the value of the tensile strength value of the electric connection skeleton 1, the less likely that the electric connection skeleton 1 deforms, and thus, in the vibration test process, the less likely that the electric connection skeleton 1 has the abnormal sounds caused by vibration of the electric connection skeleton 1 relative to the connectors 2 connected to the two ends; and on the contrary, the smaller the value of the tensile strength value of the electric connection skeleton 1, the more likely that the electric connection skeleton 1 deforms, and thus, in the vibration test process, the more likely that the electric connection skeleton 1 has the abnormal sounds caused by vibration of the electric connection skeleton 1 relative to the connectors 2 connected to the two ends. It can be seen from Table 1 that when the tensile strength of the electric connection skeleton 1 is less than or equal to 75 Mpa, the electric connection skeleton 1 can produce abnormal sounds in the vibration test process. Therefore, for the inventor, the tensile strength of the electric connection skeleton 1 is exemplarily higher than 75 MPa.

Meanwhile, it can also be seen from Table 1 that when the tensile strength of the electric connection skeleton 1 is higher than 480 Mpa, the torque value when the electric connection skeleton 1 is bent by 90° is greater than 60 N·m, and then the electric connection skeleton 1 is not bent easily. Therefore, for the inventor, the tensile strength of the electric connection skeleton 1 is further exemplarily higher than 75 MPa and lower than or equal to 480 MPa.

In an embodiment of the electric energy transmission connecting device according to the present disclosure, a material of the electric connection skeleton 1 contains copper or a copper alloy or aluminum or an aluminum alloy.

During specific implementation, the material of the electric connection skeleton 1 is selected according to use scenes and requirements, and aluminum or the aluminum alloy can be selected when the electric connection skeleton 1 is required to be light or the cost is required to be reduced. Specifically, the material can be an aluminum copper alloy with the aluminum content being 90%, an aluminum magnesium alloy with the aluminum content being 90%, an aluminum lithium alloy with the aluminum content being 90%, and an aluminum zinc alloy with the aluminum content being 90%. Copper or the copper alloy has the high electric conductivity and is wear-resistant, so that copper or the copper alloy can be selected when the low resistance and energy consumption are needed.

In an embodiment of the electric energy transmission connecting device according to the present disclosure, the terminal structure 3 is arranged at an angle relative to an axial direction of the electric connection skeleton 1. The angles required by the connector 2 and the electric connection skeleton 1 are different according to different mounting environments, so that the terminal structure 3 is required to be arranged at an angle relative to the axial direction of the electric connection skeleton 1, and different bending angles can be set as required.

Further, an angle formed by the terminal structure 3 and the axial direction of the electric connection skeleton 1 is 0° to 180°.

During specific implementation, the terminal structure 3 is arranged at an angle relative to the axial direction of the electric connection skeleton 1, so that the terminal structure 3 can be conveniently mounted in the fixing cavity 4 of the connector 2; and the specific angle is designed according to actual plugging positions of the connector 2, the fixing cavity 4 and a vehicle-mounted battery, and such angle design can reduce the assembly difficulty and shorten the processing hours.

In an embodiment of the electric energy transmission connecting device according to the present disclosure, at least a part of a surface of the terminal structure 3 is provided with a spacer metal layer, and a thermal expansion coefficient of a material of the spacer metal layer is greater than or equal to 1.1 * 10⁻⁶/K.

In order to verify the influence of the thermal expansion coefficient of the material of the spacer metal layer on the plugging and unplugging force between the terminal structure 3 and the plug terminal which are connected in an plug-in manner, the inventor selects multiple groups of terminal structures 3 and plug terminals with the completely identical sizes, and the spacer metal layers with the same specifications, the same thicknesses and the different thermal expansion coefficients are arranged on the terminal structures 3. In a normal-temperature state, for the plugging and unplugging of the terminal structure 3 and the plug terminal, the plugging and unplugging force should be less than 5 N, during an experiment, one end of terminal structure 3 or plug terminal is fixed, and the other end is subjected to an plugging and unplugging experiment by means of a tensile tester, so as to test the plugging and unplugging forces between the terminal structures 3 and the plug terminals; and during actual application, the terminal structure 3 and the plug terminal are connected and wired into circuits, and during use, the temperatures will rise, so that the inventor chooses to heat the plugged terminal structure 3 and plug terminal by 50 degrees Celsius during the experiment, then the spacer metal layer expand to reduce a gap between the terminal structure 3 and the plug terminal, and even the interference fitting is achieved. In order to make the connection between the terminal structure 3 and the plug terminal firmer and the contact resistance lower. the plugging and unplugging force greater than or equal to 25 N is an acceptable value in this embodiment, which indicates that the connection between the terminal structure 3 and the plug terminal is firm, and the terminal structure 3 and the plug terminal are not prone to separation.

**Table 2 Influence of spacer metal layers with different thermal expansion coefficients on plugging and unplugging forces between terminal structures 3 and plug terminals**

| Spacer metal layers with different thermal expansion coefficients (*10⁻⁶/K) | | | | | | | | | |
|---|---|---|---|---|---|---|---|---|---|
| 0.5 | 0.9 | 1.1 | 1.5 | 2.1 | 3.4 | 4.3 | 4.9 | 5.3 | 5.7 |

| Plugging and unplugging forces between terminal structures 3 and plug terminals (N) | | | | | | | | | |
|---|---|---|---|---|---|---|---|---|---|
| 17 | 19 | 26 | 30 | 34 | 39 | 48 | 53 | 59 | 63 |

It can be seen from Table 2 that when the thermal expansion coefficient of the spacer metal layer is less than 1.1 * 10⁻⁶/K, the plugging and unplugging force between the terminal structure 3 and the plug terminal is less than 25 N, and then during use, the terminal structure and the plug terminal are prone to separation, which causes potential safety hazards. Thus, the user requirements are not met. Therefore, the inventor chooses that the thermal expansion coefficient of the spacer metal layer is greater than or equal to 1.1 * 10⁻⁶/K.

Further, at least a part of a surface of the terminal structure 3 is provided with a spacer metal layer, and the spacer metal layer contains at least 37wt% of a copper-aluminum solid solution.

When the copper-aluminum solid solution contained in the spacer metal layer is less than 37wt%, other components in the spacer metal layer are greater than or equal to 63wt%. The large proportions of copper pure element and aluminum pure element in the spacer metal layer represent that the copper-aluminum welding is insufficient and the copper pure element and aluminum pure element are not fused into the copper-aluminum solid solution. The proportion of a copper-aluminum compound in the spacer metal layer is large, the electric conductivity of the copper-aluminum compound is very poor, the brittleness of the copper-aluminum compound is high, and mechanical properties and electrical properties of a copper-aluminum composite substrate material will be reduced in case of high content of the copper-aluminum compound. In order to find the appropriate weight percent of the copper-aluminum solid solution contained in the spacer metal layer, the inventor carries out related experiments to perform drawing force tests and voltage drop tests on the spacer metal layers with the different weight percent of copper-aluminum solid solutions, the drawing force on the terminal structure 3 less than 3000 N is unqualified, the voltage drop of the terminal structure 3 greater than 0.5 mV is also unqualified, and results are as shown in Table 3.

**Table 3 Influence of weight percent of copper-aluminum solid solution contained in spacer metal layer on drawing force and voltage drop of terminal structure 3**

| Weight percent of copper-aluminum solid solution contained in spacer metal layer (wt%) | | | | | | | | | |
|---|---|---|---|---|---|---|---|---|---|
| 35 | 37 | 40 | 45 | 50 | 60 | 70 | 80 | 85 | 90 |

| Drawing force of terminal structure 3 (N) | | | | | | | | | |
|---|---|---|---|---|---|---|---|---|---|
| 2941 | 3050 | 3241 | 3564 | 3791 | 4009 | 4130 | 4220 | 4434 | 4581 |

| Voltage drop of terminal structure 3 (mV) | | | | | | | | | |
|---|---|---|---|---|---|---|---|---|---|
| 0.51 | 0.48 | 0.46 | 0.41 | 0.37 | 0.36 | 0.27 | 0.23 | 0.19 | 0.15 |

It can be seen from Table 3 that when the copper-aluminum solid solution contained in the spacer metal layer is less than 37%, the drawing force of the terminal structure 3 is less than 3000 N and is unqualified; and meanwhile, the voltage drop of the terminal structure 3 is greater than 0.5 mV, the requirements for the mechanical properties and electrical properties of the terminal structure 3 cannot be met. As the percent of the copper-aluminum solid solution contained in the spacer metal layer gradually increases, the mechanical properties and electrical properties of the terminal structure 3 are gradually improved, so that the spacer metal layer contains no less than 37% of the copper-aluminum solid solution.

Further, the copper-aluminum solid solution contains a copper-aluminum compound, and the content of the copper-aluminum compound is less than 15wt%.

The copper-aluminum solid solution also contains the copper-aluminum compound. In order to prevent the reduction of the electrical properties of the copper-aluminum solid solution due to the excessively large proportion of the copper-aluminum compound in the copper-aluminum solid solution, the inventor carries out related tests to perform voltage drop tests on the copper-aluminum solid solutions with the different weight percent of copper-aluminum compounds, and the voltage drop of the copper-aluminum solid solution greater than 0.5 mV is unqualified. Results are as shown in Table 4.

**Table 4: Influence of different weight percent of copper-aluminum compounds on voltage drops of copper-aluminum solid solutions**

| Weight percentage of copper-aluminum compound in copper-aluminum solid solution (wt%) | | | | | | | | | |
|---|---|---|---|---|---|---|---|---|---|
| 13 | 15 | 17 | 21 | 25 | 28 | 33 | 40 | 45 | 50 |

| Voltage drop of copper-aluminum solid solution (mV) | | | | | | | | | |
|---|---|---|---|---|---|---|---|---|---|
| 0.46 | 0.49 | 0.52 | 0.54 | 0.58 | 0.61 | 0.63 | 0.66 | 0.69 | 0.70 |

It can be seen from Table 4 that when the weight percent of the copper-aluminum compound in the copper-aluminum solid solution is greater than 15%, the voltage drop of the copper-aluminum solid solution is greater than 0.5 mV, and the requirements for the electrical properties cannot be met. Therefore, the inventor exemplarily sets the content of the copper-aluminum compound in the copper-aluminum solid solution to be less than 15wt%.

In an embodiment of the electric energy transmission connecting device according to the present disclosure, at least a part of a surface of the terminal structure 3 is provided with a spacer metal layer, and a material of the spacer metal layer contains one or more selected from gold, silver, nickel, tin, zinc, a tin lead alloy, a silver antimony alloy, palladium, a palladium nickel alloy, graphite silver, graphene silver and a silver gold zirconium alloy.

During specific implementation, the spacer metal layer is arranged to improve the corrosion resistance, improve the electric conductivity and increase the plugging times, thereby better prolonging the service live of the terminal structure 3.

During specific implementation, copper, or aluminum, or the copper alloy or the aluminum alloy, as an active metal, will have an oxidation reaction with oxygen and water during use, so that one or more inactive metals are required to serve as the spacer metal layer so as to prolong the service live of the terminal structure 3. In addition, for metal contact which need to be plugging and unplugging frequently, better wear-resistant metal is also needed to serve as the spacer metal layer, which can greatly prolong the service live of the contact. Besides, the contact needs to have good electric conductivity, and the electric conductivity and stability of the above metals are superior to those of copper or the copper alloy, or aluminum or the aluminum alloy, so that the terminal structure 3 can have the better electrical properties and the longer service life.

In order to demonstrate the influence of different materials of the spacer metal layers on the overall properties of the terminal structure 3, the inventor uses the terminal structure 3 samples with the same specifications and materials and different materials of the spacer metal layers, and the electric connection skeletons 1 with the same specifications are used to perform a series of plugging and unplugging times and corrosion-resistance time tests. In order to prove the advantages and disadvantages of the selected materials and other common materials of the spacer metal layers, the inventor also selects tin, nickel and zinc to serve as experimental materials of the spacer metal layers. Experimental results are as shown in Table 5 below.

With regard to the plugging and unplugging times in Table 5, the terminal structures 3 are respectively fixed to an experiment table, a mechanical device is used to make the electric connection skeletons 1 to simulate plugging and unplugging, after every 100 times of plugging and unplugging, the operation is stopped to observe damage conditions of the spacer metal layers on the surfaces of the terminal structures 3, if surface plating layers of the terminal structures 3 are scratched and the materials of the terminals are exposed, the experiment is stopped, and the current plugging and unplugging times are recorded. In this embodiment, the plugging and unplugging times less than 8000 times are unqualified.

A corrosion-resistance time test in Table 5 is as follows: placing the terminal structure 3 in a salt mist spray test box, spraying salt mist to various positions of the terminal structure 3, taking it out every 20 hours for cleaning, and observing the surface corrosion condition, and this is a cycle; and stopping testing until the surface corrosion area of the terminal structure 3 is greater than 10% of the total area, and recording the current cycle times. In this embodiment, the cycle times less than 80 times are considered to be unqualified.

**Table 5 Influence of different materials of spacer metal layers on plugging and unplugging times and corrosion resistance of terminal structures 3**

| Different materials of spacer metal layers | | | | | | | | | | | |
|---|---|---|---|---|---|---|---|---|---|---|---|
| Gold | Silver | Silver antimony alloy | Graphite silver | Graphene silver | Silver gold zirconium alloy | Tin | Nickel | Palladium | Palladium nickel alloy | Tin lead alloy | Zinc |
| Plugging and unplugging times (times) | | | | | | | | | | | |
| 12400 | 11800 | 12200 | 12000 | 12600 | 12100 | 8300 | 8300 | 11100 | 12000 | 10000 | 8500 |
| | | | Cycle times of corrosion resistance tests (times) | | | | | | | | |
| 132 | 128 | 122 | 133 | 126 | 131 | 84 | 89 | 111 | 122 | 112 | 86 |

It can be seen from Table 5 that when the selected materials of the spacer metal layers contain gold, silver, the silver antimony alloy, palladium, the palladium nickel alloy, graphite silver, graphene silver and the silver gold zirconium alloy, the experimental results exceed the standard values a lot, and the properties are relatively stable. When the selected materials of the spacer metal layers contain nickel, tin, the tin lead alloy and zinc, the experimental results can also meet the requirement. Therefore, the inventor chooses that the material of the spacer metal layer contains one or more selected from gold, silver, nickel, tin, the tin lead alloy, zinc, the silver antimony alloy, palladium, the palladium nickel alloy, graphite silver, graphene silver and the silver gold zirconium alloy.

In some implementation manners, the spacer metal layer includes a bottom layer and a surface layer, and a multilayer plating method is used for processing the spacer metal layer. After processing, actually, terminal structure 3 still has a lot of gaps and holes on a surface microscopic interface, and these gaps and holes are the biggest reasons for wear and corrosion of the terminal structure 3 during use. In this implementation manner, a surface of terminal structure 3 is first plated with one bottom layer to fill the gaps and holes in the surface, so that the surface of the terminal structure 3 is flat and free of holes; then the surface is plated with the surface layer, so that the combination is firmer, the surface is flatter, the surface of the spacer metal layer is free of gaps and holes, the wear resistance, corrosion resistance and electrical properties of the terminal structure 3 are better, and the service life of the terminal structure 3 is greatly prolonged.

Further, at least a part of a surface of the terminal structure 3 is provided with a spacer metal layer, and the spacer metal layer is arranged on the terminal structure 3 in an electroplating, electroless plating, magnetron sputtering, vacuum plating, welding, attaching, brush-coating, spray-coating or bonding manner.

An electroplating method is a process of plating a metal surface with a thin layer of other metals or alloys by means of an electrolysis principle.

An electroless plating method is a deposition process of metals produced by means of a controllable oxidation-reduction reaction under the catalytic action of metals.

With regard to a magnetron sputtering method, by means of the interaction of a magnetic field with an electric field, electrons operate spirally near a target surface so as to increase the probability of the electrons hitting an argon gas to generate ions, and the generated ions hits the target surface under the action of the electric field for sputtering of a target material.

With regard to a vacuum plating method, under the vacuum condition, various metal films or non-metal films are deposited on a surface of a part in a distilling or sputtering manner.

Welding, also called fusion, is a manufacturing technology and technique for joining metals or other thermoplastic materials such as plastics in a heating, or high-temperature or high-pressure manner. There are many energy sources for modern welding, including gas flames, electric arcs, lasers, pressure, resistance heat, electron beams, friction and ultrasonic waves, and during actual production, the spacer metal layer is often arranged on the terminal structure 3 by means of an attaching, brush-coating, spray-coating or bonding technology.

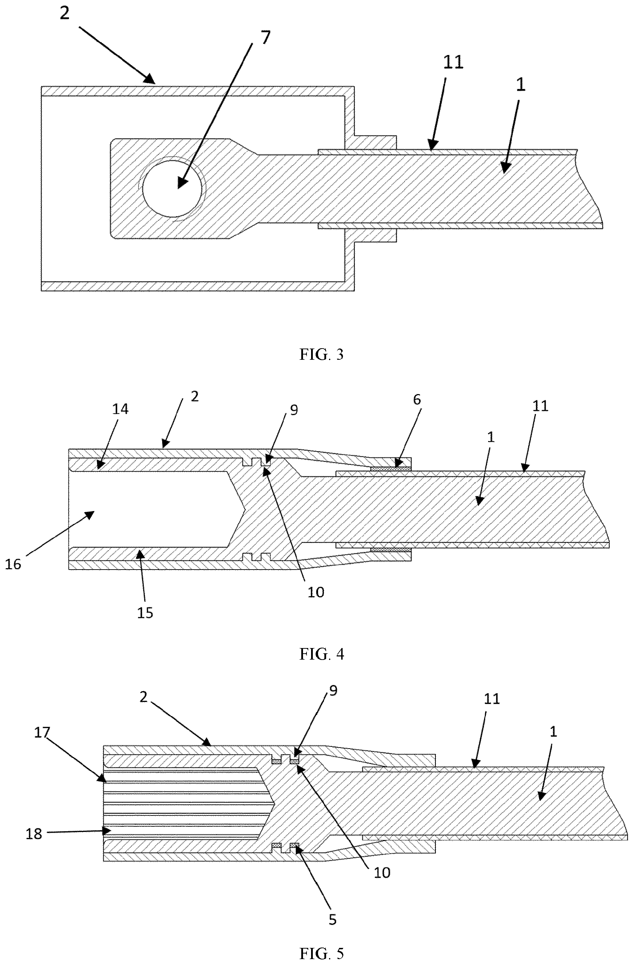

In an embodiment of the electric energy transmission connecting device according to the present disclosure, as shown in FIG. 4 and FIG. 5, a portion of the terminal structure 3 close to the electric connection skeleton 1 is provided with a groove 10 or a protrusion 9, the fixing cavity 4 is internally provided with a protrusion 9 or a groove 10, and the protrusion 9 and the groove 10 are snap-fitted in a matched manner.

During specific implementation, by means of the groove 10 and the protrusion 9 matched with each other, the terminal structure 3 and the electric connection skeleton 1 as a whole are capable of being fixed in the fixing cavity 4, thereby preventing damage to the connector 2 due to vibration of the terminal, and prolonging the service life of the electric energy transmission connecting device.

Further, as shown in FIG. 5, a sealing ring 5 is arranged between the protrusion 9 and the groove 10.

During specific implementation, the sealing ring 5 is arranged between the protrusion 9 and the groove 10, so that foreign matters such as dust and water can be prevented from entering the fixing cavity 4, and damage of the connector 2 can be prevented; meanwhile, the sealing ring 5 can also play a role in damping, thereby preventing damage of outer shell of the fixing cavity 4 due to vibration during the electric energy transmission connecting device in use; and at the same time, the insulating effect can also be achieved between the terminal structure 3 and the outer shell of the fixing cavity 4.

In an embodiment of the electric energy transmission connecting device according to the present disclosure, the terminal structure 3 is a columnar body, and a cross section of the columnar body is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

During specific implementation, the shape of the cross section of terminal structure 3 being the columnar body can be set according to requirements, or designed according to the structure of the connector 2, thereby improving the adaptability of the terminal structure 3 to the connector 2.

In an embodiment of the electric energy transmission connecting device according to the present disclosure, as shown in FIG. 3, the terminal structure 3 is in a busbar shape, and the busbar shape is provided with a through hole or a threaded hole 7.

During specific implementation, plug terminal is provided with a corresponding threaded hole or through hole, and the terminal structure 3 is fixedly connected to the plug terminal by means of a bolt, thereby preventing loosening and separation of the terminal structure 3 and the plug terminal.

In an embodiment of the electric energy transmission connecting device according to the present disclosure, as shown in FIG. 4, the terminal structure 3 includes an upper clamping plate 14 with a flat plate shape and a lower clamping plate 15 with the flat plate shape, and a terminal plug-in groove 16 is formed between the upper clamping plate 14 and the lower clamping plate 15.

During specific implementation, terminal structure is connected to a charging source or the vehicle-mounted battery of the electric vehicle by means of the plug-in groove 16, thereby preventing casualties and property losses caused by separation of the two parts due to vibration during operation; and meanwhile, plugging and unplugging are achieved by means of the plug-in groove conveniently and quickly.

In an embodiment of the electric energy transmission connecting device according to the present disclosure, the terminal structure 3 is in a cylindrical shape, and a cross section of the interior of the cylindrical shape is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

During specific implementation, for terminal structure 3 with the cylindrical shape, the shape of the cross section of the interior of the cylindrical shape can be set according to requirements, or designed according to the structure of the connector 2 and the shape of the cross section of the electric connection skeleton, thereby improving the adaptability of the terminal structure 3 to the connector 2.

Further, as shown in FIG. 5, an outer wall of the cylindrical shape is provided with an expansion-contraction joint 17 extending in an axial direction, and the expansion-contraction joint 17 divides the terminal structure 3 into elastic sheets 18.

During specific implementation, by means of the elastic sheets 18, the plug terminal plugged into the terminal structure 3 can be held, thereby preventing the condition that the two parts are separated and the vehicle-mounted battery of the electric vehicle cannot be normally charged.

In an embodiment of the electric energy transmission connecting device according to the present disclosure, as shown in FIG. 2 to FIG. 7, an edge of an end portion of the terminal structure 3 away from the electric connection skeleton 1 is chamfered and rounded.

During specific implementation, the end portion of the terminal structure 3 is chamfered and rounded, so that the plugging and unplugging of the plug terminal are facilitated, and it plays a guiding role during the plugging and unplugging of the two parts.

In an embodiment of the electric energy transmission connecting device according to the present disclosure, as shown in FIG. 2 to FIG. 5, a periphery of the electric connection skeleton 1 is further sleeved with an insulating layer 11. The insulating layer 11 can prevent short circuits caused by the contact of the electric connection skeleton 1 with other electrically conductive parts, and improve the safety of the electric energy transmission connecting device.

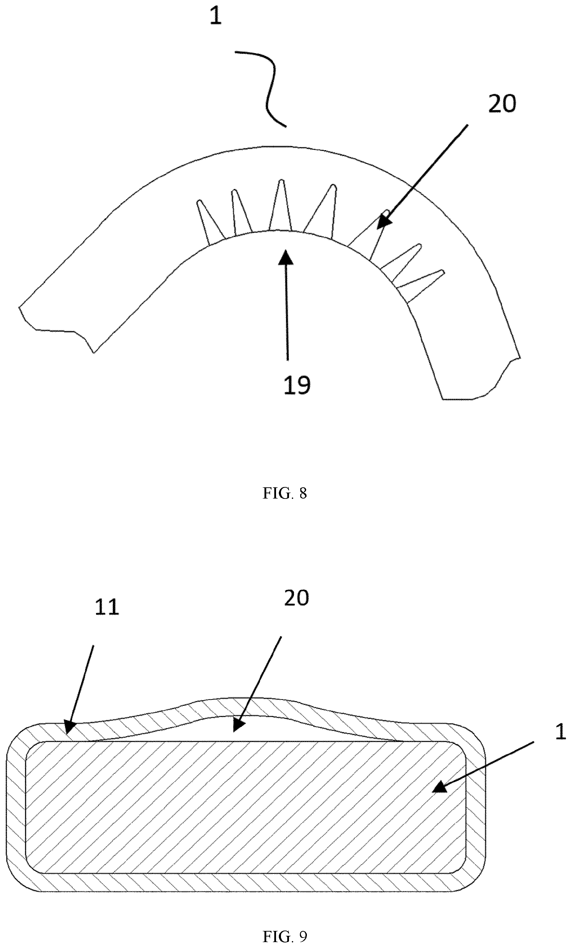

Further, as shown in FIG. 8 and FIG. 9, the electric connection skeleton 1 is provided with at least one bent portion 19, at least a part of the bent portion 19 includes at least one cavity 20, and the cavity 20 is located between an inner wall of the insulating layer 11 and the periphery of the electric connection skeleton 1.

In a design process of the electric energy transmission connecting device, the sectional area of the electric connection skeleton 1 is well calculated according to a conducting current, a sufficient margin is allowed, and even if the conducting current of the electric connection skeleton 1 exceeds a rated current due to an instable voltage, the electric connection skeleton 1 can only be heated, and the electric connection skeleton 1 cannot be fused or burnt. However, the insulating layer 11 covering the outside of the electric connection skeleton 1 is made of a plastic material and has a melting temperature in a range of 115°C to 120°C. In addition, during mounting of the electric connection skeleton 1, the insulating layer 11 also needs to be covered with a low-melting-point object such as a rubber-coated fabric and a sponge, which has a melting temperature below 100 degrees Celsius. Therefore, when the current is too large and the temperature rise exceeds the standard, the insulating layer 11 or the material such as the rubber-coated fabric and the sponge which ia locked on the periphery of the electric connection skeleton 1 is the object that needs to be protected against fusion or burning.

The cavity 20 exists between the bent portion 19 of the electric connection skeleton 1 and the inner wall of the insulating layer 11, air exists in the cavity 20, and the thermal conduction effect of the closed air is poor, so that when the heating amount of the bent portion 19 of the electric connection skeleton 1 is large, the insulating layer 11 outside the cavity 20 will not be affected, thereby protecting the insulating layer 11 of the bent portion 19 against softening or melting.

The closed air inside the cavity 20 has an effect of heat isolation, so that heat of the bent portion 19 of the electric connection skeleton 1 cannot be transmitted outside the insulating layer 11, and the low-melting-point object, such as the rubber-coated fabric and the sponge, that covers the insulating layer 11 cannot be heated to be molten, thereby reducing the probability of accidents.

The closed air inside the cavity 20 expands during heating of the bent portion 19 of the electric connection skeleton 1, due to the existence of the insulating layer 11, the pressure in the cavity 20 gradually increases, according to the Paschen's rule, the breakdown voltage increases as the air pressure increases, thus the voltage breakdown resistance of the bent portion 19 is improved, and the safety of the electric energy transmission connecting device is improved.

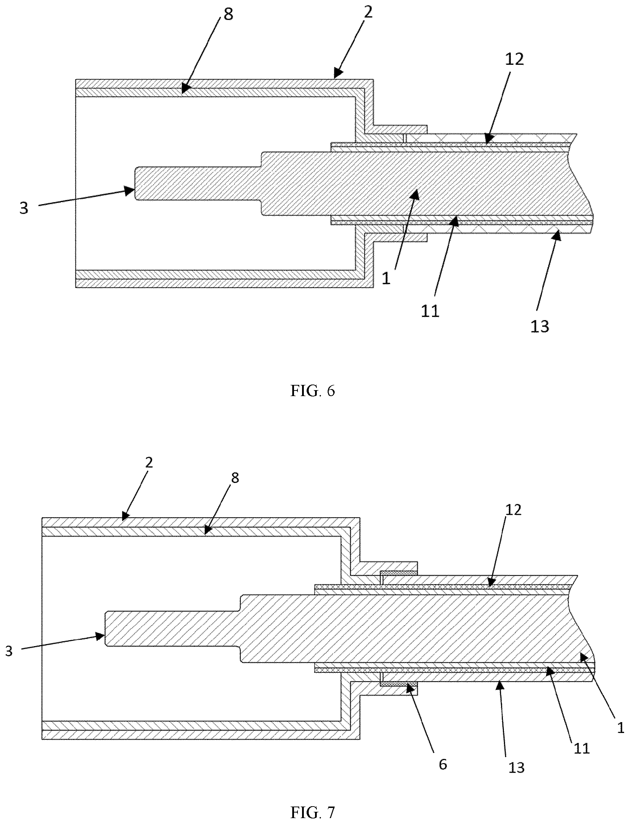

Further, as shown in FIG. 6 and FIG. 7, a periphery of the insulating layer 11 is further sequentially sleeved with a shielding layer 12 and an outer insulating layer 13.

During specific implementation, through arrangement of the shielding layer 12, electromagnetic waves generated by the electric connection skeleton 1 during use can be shielded, thereby preventing the electric connection skeleton 1 from interfering with other instruments and devices during use. The shielding layer 12 can reduce the interference of electromagnetic radiation generated by the electric connection skeleton 1 on other electric devices in the vehicle, and the shielding layer 12 is made of a conductor and needs to be grounded, so that the insulating layer 11 is arranged between the shielding layer 12 and the electric connection skeleton 1 to prevent them from contacting. The outer insulating layer 13 can prevent short-circuiting caused by the contact between the shielding layer 12 and a vehicle shell of the electric vehicle.

Further, as shown in FIG. 4, a sealing structure 6 is provided between the connector 2 and the insulating layer 11. The sealing structures 6 can prevent foreign matters such as dust and water from entering the connectors 2, so that damage of the connectors 2 can be prevented; and meanwhile, the sealing structures 6 can also play a role in damping, thereby preventing damage of the outer shells of the connectors 2 due to vibration of the electric energy transmission connecting device during use.

Further, as shown in FIG. 7, the sealing structure 6 is provided between the connector 2 and the outer insulating layer 13.

During specific implementation, the connector 2 is connected to the electric connection skeleton 1 in a sealed manner, thereby preventing the foreign matters such as dust and water from entering the connector 2, and preventing casualties and property losses caused by open circuits between positive terminal structure 3 and negative terminal structure 3 in the connector 2.

Further, the connector 2 is internally provided with an inner shielding shell 8 with a shielding effect, and the inner shielding shell 8 is electrically connected to the shielding layer 12.

During specific implementation, through arrangement of the inner shielding shell 8, electromagnetic radiation or electromagnetic wave interference of the terminal structure 3 in an electrified state can be shielded, thereby preventing the condition that other control systems cannot operate normally due to electromagnetic interference.

Further, materials of the shielding layer 12 and/or the inner shielding shell 8 contain an electrically conductive metal or an electrically conductive plastic.

During specific implementation, the materials of the shielding layer 12 and/or the inner shielding shells 8 contain conductor and need to be grounded, and the electrically conductive plastic and the electrically conductive metal can shield the electromagnetic radiation, thereby preventing the interference on other electric devices in the vehicle. The electrically conductive plastic can be electrically conductive plastic or electrically conductive rubber, and can be processed in an injection molding, extrusion molding, blow molding, foaming, dip-molded or 3D printing manner, the processing technology is simple, and the processing cost is reduced.

In an embodiment of the electric energy transmission connecting device according to the present disclosure, a cross section of the electric connection skeleton 1 is in a polygonal shape, and all corners of the polygonal shape are chamfered or rounded.

During specific implementation, all the corners of the electric connection skeleton 1 with the cross section in the polygonal shape are chamfered or rounded, so that the connection between the electric connection skeleton 1 and the connection terminal can be facilitated, when being welded or crimped, the electric connection skeleton 1 are connected to the connection terminal more firmly, the contact area are larger, and the conducting current is better; heating and even burning accidents caused by excessively large resistance caused by excessively small contact area between the electric connection skeleton 1 and the connection terminals during connection are avoided; and casualties and the property loss caused by scratching of the insulating layer by edges formed by two adjacent sides of the polygonal shape during use can also be avoided.

In an embodiment of the electric energy transmission connecting device according to the present disclosure, one of the connectors 2 is a charging socket. With the popularization of new energy automobiles, devices and facilities for charging the new energy automobiles are also developed. Rechargeable batteries of the new energy automobiles have the requirement for fast charge, so that a charging socket assembly is needed. In the present disclosure, one of the connectors 2 is the charging socket and is connected to a charger, and the connector 2 at the other end is a high-voltage connector and is connected to the rechargeable battery, thereby achieving the purpose of charging the rechargeable battery.

A vehicle in the present disclosure includes the electric energy transmission connecting device.

Although some specific embodiments of the present disclosure are illustrated in detail by means of examples, those skilled in the art should understand that the above examples are only for the purpose of illustration, and are not intended to limit the scope of the present disclosure. Those skilled in the art should understand that the above embodiments can be amended without departing from the scope and spirit of the present disclosure. The scope of the present disclosure is defined by the appended claims.

## Claims

1. An electric energy transmission connecting device, comprising at least one electric connection skeleton and connectors connected to two ends of the electric connection skeleton, wherein the connector is internally provided with at least one fixing cavity, an end portion of the electric connection skeleton extends to form a terminal structure, at least a part of the terminal structure is arranged in the fixing cavity, and the terminal structure achieves an electric connection function of the connector.

2. The electric energy transmission connecting device according to claim 1, wherein the terminal structure and the electric connection skeleton have different shapes of cross sections.

3. The electric energy transmission connecting device according to claim 1, wherein the terminal structure and the electric connection skeleton have different cross sectional areas.

4. The electric energy transmission connecting device according to claim 1, wherein the connector is formed on the terminal structure and the electric connection skeleton.

5. The electric energy transmission connecting device according to claim 1, wherein the connector internally comprises a high-voltage interlock mechanism.

6. The electric energy transmission connecting device according to claim 1, wherein at least a part of the electric connection skeleton is a rigid body, and the tensile strength of the electric connection skeleton is higher than 75 MPa.

7. The electric energy transmission connecting device according to claim 1, wherein the terminal structure is arranged at an angle relative to an axial direction of the electric connection skeleton.

8. The electric energy transmission connecting device according to claim 7, wherein an angle formed by the terminal structure and the axial direction of the electric connection skeleton is 0° to 180°.

9. The electric energy transmission connecting device according to claim 1, wherein at least a part of a surface of the terminal structure is provided with a spacer metal layer, and a thermal expansion coefficient of a material of the spacer metal layer is greater than or equal to 1.1 * 10⁻⁶/K.

10. The electric energy transmission connecting device according to claim 1, wherein at least a part of a surface of the terminal structure is provided with a spacer metal layer, and the spacer metal layer comprises at least 37wt% of a copper-aluminum solid solution.

11. The electric energy transmission connecting device according to claim 10, wherein the copper-aluminum solid solution contains a copper-aluminum compound, and the content of the copper-aluminum compound is less than 15wt%.

12. The electric energy transmission connecting device according to claim 1, wherein at least a part of a surface of the terminal structure is provided with a spacer metal layer, and a material of the spacer metal layer comprises one or more selected from gold, silver, nickel, tin, zinc, a tin lead alloy, a silver antimony alloy, palladium, a palladium nickel alloy, graphite silver, graphene silver and a silver gold zirconium alloy.

13. The electric energy transmission connecting device according to claim 12, wherein at least a part of a surface of the terminal structure is provided with a spacer metal layer, and the spacer metal layer is arranged on the terminal structure in an electroplating, electroless plating, magnetron sputtering, vacuum plating, welding, attaching, brush-coating, spray-coating or bonding manner.

14. The electric energy transmission connecting device according to claim 1, wherein a portion of the terminal structure close to the electric connection skeleton is provided with a groove or a protrusion, the fixing cavity is internally provided with a protrusion or a groove, and the protrusion and the groove are snap-fitted in a matched manner.

15. The electric energy transmission connecting device according to claim 14, wherein a sealing ring is provided between the protrusion and the groove.

16. The electric energy transmission connecting device according to claim 1, wherein the terminal structure is a columnar body, and a cross section of the columnar body is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

17. The electric energy transmission connecting device according to claim 1, wherein the terminal structure is in a busbar shape, and the busbar shape is provided with a through hole or a threaded hole.

18. The electric energy transmission connecting device according to claim 1, wherein the terminal structure comprises an upper clamping plate with a flat plate shape and a lower clamping plate with the flat plate shape, and a terminal plug-in groove is formed between the upper clamping plate and the lower clamping plate.

19. The electric energy transmission connecting device according to claim 1, wherein the terminal structure is in a cylindrical shape, and a cross section of the interior of the cylindrical shape is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

20. The electric energy transmission connecting device according to claim 19, wherein an outer wall of the cylindrical shape is provided with an expansion-contraction joint extending in an axial direction, and the expansion-contraction joint divides the terminal structure into elastic sheets.

21. The electric energy transmission connecting device according to claim 1, wherein an edge of an end portion of the terminal structure away from the electric connection skeleton is chamfered and rounded.

22. The electric energy transmission connecting device according to claim 1, wherein a periphery of the electric connection skeleton is further sleeved with an insulating layer.

23. The electric energy transmission connecting device according to claim 22, wherein the electric connection skeleton is provided with at least one bent portion, at least a part of the bent portion comprises at least one cavity, and the cavity is located between an inner wall of the insulating layer and the periphery of the electric connection skeleton.

24. The electric energy transmission connecting device according to claim 22, wherein a periphery of the insulating layer is further sequentially sleeved with a shielding layer and an outer insulating layer.

25. The electric energy transmission connecting device according to claim 22, wherein a sealing structure is provided between the connector and the insulating layer.

26. The electric energy transmission connecting device according to claim 24, wherein a sealing structure is provided between the connector and the outer insulating layer.

27. The electric energy transmission connecting device according to claim 24, wherein the connector is internally provided with an inner shielding shell with a shielding effect, and the inner shielding shell is electrically connected to the shielding layer.

28. The electric energy transmission connecting device according to claim 27, wherein materials of the shielding layer and/or the inner shielding shell contain an electrically conductive metal or an electrically conductive plastic.

29. The electric energy transmission connecting device according to claim 1, wherein one of the connectors is a charging socket.

30. The electric energy transmission connecting device according to claim 1, wherein a cross section of the electric connection skeleton is in a polygonal shape, and all corners of the polygonal shape are chamfered or rounded.

31. A vehicle, comprising the electric energy transmission connecting device according to any one of claims 1 to 30.
